# EUROPÄISCHE PATENTANMELDUNG

(11) **EP 2 684 453 A1**
(43) Veröffentlichungstag der Anmeldung: **15.01.2014**
(21) Anmeldenummer: 13401069.3
(22) Anmeldetag: 08.07.2013
(51) Int. Cl.: A01M 7/00

(54) **Landwirtschaftliche Feldspritzvorrichtung**

(30) Priorität: 12.07.2012 DE 102012106257
(71) Anmelder: Amazonen-Werke H. Dreyer GmbH & Co. KG, 49205 Hasbergen (DE)
(72) Erfinder: Wessels, Thomas, 49080 Osnabrück (DE)

(57) **Zusammenfassung**

Landwirtschaftliche Feldspritzvorrichtung (1) mit einem Rahmen (9) und daran aufgehängtem Spritzgestänge (4) mit mehreren, in Reihe angeordneten und in Spritzkörpergehäusen (8) angeordneten Spritzdüsen (9) zum Ausbringen von Spritzmittel unter Erzeugung von zum Ackerboden gerichteten Sprühkegeln (10), und mit wenigstens einer am Rahmen und/oder am Spritzgestänge angeordneten Sensoreinrichtung (11) zur Erfassung und/oder Überwachung der Sprühkegel. Um eine für den rauen landwirtschaftlichen Betrieb geeignete Sensoreinrichtung zur Überwachung der Sprühkegel zu schaffen, ist vorgesehen, dass die Sensoreinrichtung eine auf Schallbasis arbeitende Vorrichtung ist.

## Beschreibung

Die Erfindung betrifft eine landwirtschaftliche Feldspritzvorrichtung gemäß des Oberbegriffes des Patentanspruches 1.

Eine derartige landwirtschaftliche Feldspritzvorrichtung ist in der EP 1 961 300 B1 beschrieben. Diese Feldspritzvorrichtung weist im Bereich der Spritzkörpergehäuse, in denen die den Sprühkegel beleuchtende erzeugenden Spritzdüsen, aus denen unter Druck gesetzte auszubringende Flüssigkeit austritt, eine die den Sprühkegel Lichtquelle auf. Der Lichtkegel der Lichtquelle schneidet den Sprühkegel. Zur Überwachung, ob Flüssigkeit in einem Sprühkegel ausgebracht wird, ist den Lichtquellen jeweils eine die von den Sprühkegel reflektierten Lichtstrahlen empfangende Sensoreinheit zugeordnet. Hierdurch erfolgt eine automatische Überwachung der Ausbringung von Flüssigkeiten. Im rauen landwirtschaftlichen Betrieb beweist jedoch die mittels Lichtstrahlen überwachte korrekte Ausbringung der Flüssigkeiten in Sprühkegeln Schwächen auf, indem die Lichtstrahlen ausstrahlende Einheit oder die die reflektierten Lichtstrahlen empfangende Sensoreinheit verschmutzen. So ist nicht in jedem Fall eine korrekte Überwachung der Sprühkegel möglich. Auch bei intensiver Sonneneinstrahlung kann es zu Fehlinterpretationen der Messwerte kommen.

Der Erfindung liegt die Aufgabe zu Grunde, eine für den rauen landwirtschaftlichen Betrieb geeignete Sensoreinrichtung zur Überwachung der Sprühkegel zu schaffen.

Diese Aufgabe wird erfindungsgemäß dadurch gelöst, dass die Sensoreinrichtung eine auf Schall- und/oder Vibrationsbasis arbeitende Vorrichtung ist.

Eine derartige Sensoreinrichtung ist gegen Verschmutzungen unempfindlich. Mittels dieser auf Schall- und/oder Vibrationsbasis arbeitenden Vorrichtung wird der von der Düsenkörpern ausgestrahlte Körperschall der einzelnen Düsenkörper gemessen, welcher durch die Ausbringung der jeweiligen Flüssigkeit über die in den Gehäusen angeordneten Düsenkörper entsteht. Aufgrund einer Änderung der Amplitude bzw. der ausgestrahlten Frequenz kann ein ordnungsgemäßes Ausbringen der Flüssigkeit oder eine Verstopfung des Düsenkörpers detektiert werden. Hierbei muss beachtet werden, dass die anderen überlagernden Schwingungen der Maschine aus dem entsprechenden Signal mittels eines geeigneten Auswertungsprogrammes herausgerechnet werden.

Eine einfache Ausgestaltung der auf Schall- und/oder Vibrationsbasis arbeitenden Vorrichtung wird dadurch erreicht, dass die Sensoreinrichtung ein Beschleunigungssensor ist.

In einer anderen Ausgestaltung ist vorgesehen, dass die Sensoreinrichtung ein Mikrofon ist.

Eine einfache und vorteilhafte Anordnung der Sensoreinrichtung ergibt sich dadurch, dass die Sensoreinrichtung in dem Spritzkörpergehäuse, vorzugsweise in integrierter Weise angeordnet ist.

Ein erfindungsgemäßes Verfahren zur Überwachung der Ausbringung von Flüssigkeiten mittels einer Sensoreinrichtung bei einer landwirtschaftlichen Feldspritzvorrichtung lässt sich dadurch verwirklichen, dass mittels der Sensoreinrichtung der von den einzelnen Spritzkörpergehäusen und/oder von den einzelnen Sprühkegeln erzeugte Körperschall und/oder Vibrationen erfasst und die entsprechend erfassten Daten an eine elektronische Auswerteeinheit übermittelt werden, dass mittels eines in dem Speicher der Auswerteeinheit abgespeicherten Auswerteprogrammes aus den Daten über den erfassten Körperschall das Vorhandensein und/oder zumindest teilweise Nichtvorhandenseins eines Sprühkegels ermittelt und ein entsprechendes Signal optisch und/oder akustisch über eine geeignete Ausgabeeinrichtung ausgegeben wird.

Infolge dieser Maßnahmen lässt sich in einfacher Weise überwachen, ob die auszubringende Flüssigkeit korrekt ausgebracht wird, oder ob eine vollständige oder teilweise Verstopfung des Düsenkörpers vorliegt. Somit kann, falls eine Verstopfung vorliegt, der Fahrer in einfacher Weise informiert werden, damit das Problem behoben werden kann.

Um eine möglichst genaue Überwachung der Ausbringung der Flüssigkeit zu ermöglichen, um ein Verstopfen des Düsenkörpers erfassen zu können, ist vorgesehen, dass die Sensoreinrichtung bei dem Nichtvorhandensein der Sprühkegel kalibriert wird.

Eine einfache Kalibrierung der Sensoreinrichtung kann dadurch erfolgen, dass das Auswerteprogramm der Sensoreinrichtung aus der Differenzbildung zwischen dem Körperschall bei dem zumindest teilweise Vorhandensein der Sprühkegel und dem Körperschall bei dem Nichtvorhandensein der Sprühkegel das Vorhandensein und/oder zumindest teilweise Nichtvorhandenseins des jeweiligen Sprühkegels berechnet und/oder ermittelt.

Eine weitere einfache Kalibrierung der Sensoreinrichtung lässt sich dadurch erreichen, dass das Auswerteprogramm der Sensoreinrichtung aus der Differenzbildung zwischen der Vibration der Spritzkörpergehäuse bei dem zumindest teilweise Vorhandensein der Sprühkegel und der Vibration der Spritzkörpergehäuse bei dem Nichtvorhandensein der Sprühkegel das Vorhandensein und/oder zumindest teilweise Nichtvorhandenseins des jeweiligen Sprühkegels berechnet und/oder ermittelt.

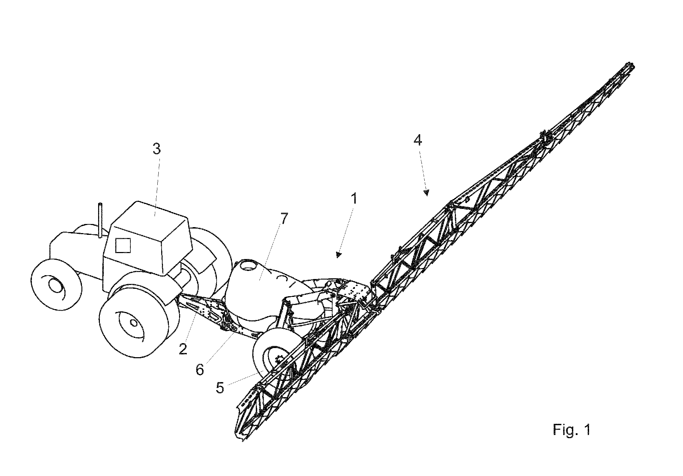

Weitere Einzelheiten der Erfindung sind der
Beispielsbeschreibung zu entnehmen. Die Zeichnungen zeigen
- Fig.1: die landwirtschaftliche Feldspritze mit dem sich in Arbeitsstellung befindlichen Verteilergestänge mit Spritzdüsen und mit den durch diese Spritzdüsen erzeugten Spritzfächer in perspektivischer und in Prinzipdarstellung,

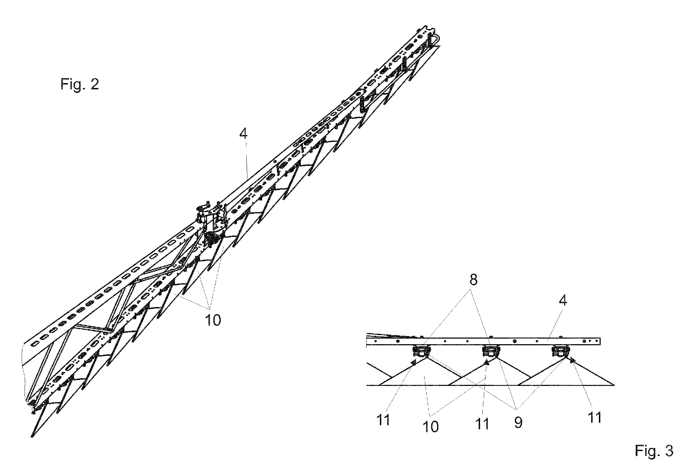

- Fig.2: der rechte Teilbereich des Verteilergestänges mit Spritzdüsen und mit den durch diese Spritzdüsen erzeugten Spritzfächern in gleicher Darstellungsweise, jedoch in vergrößertem Maßstab und
- Fig.3: einen Teilbereich des Verteilergestänges gemäß Fig.2, jedoch in einem größeren Maßstab in Rückansicht.

Die gezogene landwirtschaftliche Feldspritze 1 ist über die Deichsel 2 an den Ackerschlepper 3 angekoppelt. Die Feldspritze 1 weist das Verteilergestänge 4, das Fahrwerk 5 und den auf dem Rahmen 6 angeordneten Vorratsbehälter 7 auf. An dem Verteilergestänge 4 sind in gleichmäßigen Abständen an der am Verteilergestänge 4 angeordneten Flüssigkeitszuleitung Anschlusselemente für die Düsenkörpergehäuse 8 mit Anschlussstutzen zum Anschluss von Spritzdüsen 9 angeordnet.

Über die Spritzdüsen 9 wird die auszubringende Flüssigkeit in von den Spritzdüsen 9 erzeugten zum Ackerboden gerichteten Sprühkegeln 10 ausgebracht.

An den an dem Spritzgestänge 4, welches am Rahmen 9 angeordnet ist, angeordneten Spritzkörpergehäusen 9 ist jeweils ein Sensor 11 einer Sensoreinrichtung zur Erfassung und/Überwachung der Sprühkegel 10 angeordnet. Die Sensoren 11 der Sensoreinrichtung arbeiten auf Schall- und/oder Vibrationsbasis. Dieser Sensor kann ein Beschleunigungssensor oder ein Mikrofon sein.

Der Sensor 11 der Sensoreinrichtung zur Erfassung und/oder Überwachung der Sprühkegel 10 ist jeweils in integrierter Weise in dem jeweiligen Spritzkörpergehäuse 9 angeordnet.

Der jeweilige Sensor 11 der Sensoreinrichtung ist über eine geeignete Datenleitung und/oder -übertragungseinrichtung mit einem als Bordrechner 12 ausgebildeten elektronischen Auswerteeinheit verbunden. Dem Bordrechner 12 werden dann die von den einzelnen Sensoren erfassten Daten der von den einzelnen Spritzkörpergehäusen 9 und oder von den einzelnen Sprühkegeln 10 erzeugten Körperschall und/oder Vibrationen über die jeweilige Datenleitung und/oder - übertragungseinrichtung übertragen. Mittels des in den Speicher des Bordrechners 12 der Sensoreinrichtung abgespeicherten Auswerteprogrammes wird aus den Daten Daten über den erfassten Körperschall das Vorhandensein und/oder zumindest teilweise Nichtvorhandenseins eines Sprühkegels 10 ermittelt und ein entsprechendes Signal optisch und/oder akustisch über eine geeignete Ausgabeeinrichtung ausgegeben.

Um eine besonders genau arbeitende Sensoreinrichtung zu erreichen, wird die Sensoreinrichtung bei dem Nichtvorhandensein der Sprühkegel 10 kalibriert.

Hierbei ist verfahrensgemäß vorgesehen, dass das Auswerteprogramm der Sensoreinrichtung aus der Differenzbildung zwischen dem Körperschall bei dem zumindest teilweise Vorhandensein der Sprühkegel 10 und dem Körperschall bei dem Nichtvorhandensein der Sprühkegel 10 das Vorhandensein und/oder zumindest teilweise Nichtvorhandenseins des jeweiligen Sprühkegels 10 berechnet und/oder ermittelt.

Ebenfalls kann in einer anderen Ausgestaltung verfahrensgemäß vorgesehen sein, dass das Auswerteprogramm der Sensoreinrichtung aus der Differenzbildung zwischen dem Vibration der Spritzkörpergehäuse 9 bei dem zumindest teilweise Vorhandensein der Sprühkegel 10 und der Vibration der Spritzkörpergehäuse 9 bei dem Nichtvorhandensein der Sprühkegel 10 das Vorhandensein und/oder zumindest teilweise.

Somit wird eine Sensoreinrichtung geschaffen, bei der über eine Sensoreinrichtung der ausgestrahlte Körperschall oder die Vibration erfasst und über eine geeignete Datenübertragungseinrichtung, die beispielsweise auch als Bussystem ausgebildet sein kann und an einem Bordrechner 12 angeschlossen ist. Bei einer Veränderung des Signals wird eine Warnung ausgegeben. Zur Kalibrierung wird die betroffene Spritzdüse abgeschaltet. Der dann gemessene Körperschall ist das überlagerte Störsignal, welches bei der Überwachung herausgerechnet werden muss, um ein sauberes Nutzsignal zu erhalten.

## Patentansprüche

1. Landwirtschaftliche Feldspritzvorrichtung mit einem Rahmen und daran aufgehängtem Spritzgestänge mit mehreren, in Reihe angeordneten und in Spritzkörpergehäusen angeordneten Spritzdüsen zum Ausbringen von Spritzmittel unter Erzeugung von zum Ackerboden gerichteten Sprühkegeln, und mit wenigstens einer am Rahmen und/oder am Spritzgestänge angeordneten Sensoreinrichtung (12) zur Erfassung und/oder Überwachung der Sprühkegel, **dadurch gekennzeichnet, dass** die Sensoreinrichtung eine auf Schall- und/oder Vibrationsbasis arbeitende Vorrichtung ist.

2. Feldspritzvorrichtung nach Anspruch 1, **dadurch gekennzeichnet, dass** die Sensoreinrichtung (12) ein Beschleunigungssensor ist.

3. Feldspritzvorrichtung nach Anspruch 1, **dadurch gekennzeichnet, dass** die Sensoreinrichtung (12) ein Mikrofon ist.

4. Feldspritzvorrichtung nach Anspruch 1, **dadurch gekennzeichnet, dass** die Sensoreinrichtung (12) in dem Spritzkörpergehäuse (9), vorzugsweise in integrierter Weise angeordnet ist.

5. Verfahren zur Überwachung der Ausbringung von Flüssigkeiten mittels einer Sensoreinrichtung bei einer landwirtschaftlichen Feldspritzvorrichtung nach zumindest einem der Ansprüche 1 bis 4, **dadurch gekennzeichnet, dass** mittels der Sensoreinrichtung (12) der von den einzelnen Spritzkörpergehäusen (9) und/oder von den einzelnen Sprühkegeln (10) erzeugte Körperschall und/oder Vibrationen erfasst und die entsprechend erfassten Daten an eine elektronische Auswerteeinheit (12) übermittelt werden, dass mittels eines in dem Speicher der Auswerteeinheit (12) abgespeicherten Auswerteprogrammes aus den Daten über den erfassten Körperschall das Vorhandensein und/oder zumindest teilweise Nichtvorhandenseins eines Sprühkegels (10) ermittelt und ein entsprechendes Signal optisch und/oder akustisch über eine geeignete Ausgabeeinrichtung ausgegeben wird.

6. Verfahren nach Anspruch 5, **dadurch gekennzeichnet, dass** die Sensoreinrichtung (11) bei dem Nichtvorhandensein der Sprühkegel kalibriert wird.

7. Verfahren nach zumindest einem der Ansprüche 5 und 6, **dadurch gekennzeichnet, dass** das Auswerteprogramm der Sensoreinrichtung (11) aus der Differenzbildung zwischen dem Körperschall bei dem zumindest teilweise Vorhandensein der Sprühkegel (10) und dem Körperschall bei dem Nichtvorhandensein der Sprühkegel (10) das Vorhandensein und/oder zumindest teilweise Nichtvorhandenseins des jeweiligen Sprühkegels (10) berechnet und/oder ermittelt.

8. Verfahren nach zumindest einem der Ansprüche 6 und 7, **dadurch gekennzeichnet, dass** das Auswerteprogramm der Sensoreinrichtung (11) aus der Differenzbildung zwischen dem Vibration der Spritzkörpergehäuse bei dem zumindest teilweise Vorhandensein der Sprühkegel (10) und der Vibration der Spritzkörpergehäuse (9) bei dem Nichtvorhandensein der Sprühkegel (10) das Vorhandensein und/oder zumindest teilweise Nichtvorhandenseins des jeweiligen Sprühkegels (10) berechnet und/oder ermittelt.
